# EUROPÄISCHE PATENTSCHRIFT

(11) **EP 4 352 436 B1**
(45) Veröffentlichungstag und Bekanntmachung des Hinweises auf die Patenterteilung: **11.02.2026**
(21) Anmeldenummer: 21777225.0
(22) Anmeldetag: 08.09.2021
(51) Int. Cl.: F27B 7/20, F27B 7/36, C04B 7/43

(54) **TONKALZINIERUNGSANLAGE**
CLAY CALCINING PLANT
USINE DE CALCINATION D'ARGILE

(43) Veröffentlichungstag der Anmeldung: 17.04.2024
(73) Patentinhaber: Loesche GmbH, 40549 Düsseldorf (DE)
(72) Erfinder: WULFERT, Holger, 40549 Düsseldorf (DE); REFORMAT, Martin, 40549 Düsseldorf (DE); LINDL, David, 90411 Nürnberg (DE); FINK, Ralf, 90411 Nürnberg (DE)
(74) Vertreter: Wunderlich & Heim Patentanwälte PartG mbB
(86) Internationale Anmeldenummer: PCT/EP2021/074725
(87) Internationale Veröffentlichungsnummer: WO 2023/036410

(56) Entgegenhaltungen:
- EP-A1- 3 828 151
- WO-A1-2015/082075
- CN-A- 107 084 616
- DE-A1- 10 202 776
- DE-A1- 102011 050 677
- UEDA Y ET AL: "COAL FIRING OF REINFORCED SUSPENSION PREHEATER (RSP) PROCESS//KOHLEFEUERUNG BEIM WAERMETAUSCHERVERFAHREN MIT EINGEBAUTEM CALCINIERER (RSP)//CHAUFFAGE AU CHARBON AVEC LE PROCEDE A EXCHANGEUR DE CHALEUR A CALCINATEUR INCORPORE (RSP)", ZKG INTERNATIONAL - ZEMENT - KALK - GIPS INTERNATIONAL, BAUVERLAG BV GMBH, DE, vol. 36, no. 4, 1 April 1983 (1983-04-01), pages 199 - 207, XP001202355, ISSN: 0949-0205

## Beschreibung

Die Erfindung betrifft eine Tonkalzinierungsanlage zum Aktivieren von Ton als Aufgabematerial. Dieser Ton weist einen signifikanten Anteil von mindestens 40%, bevorzugte mindestens 50%, thermisch aktivierbare Schichtsilikaten auf. Diese können beispielsweise in Form von Kaolinit, Illit und/oder Montmorillonit vorliegen. Die Tonkalzinierungsanlage weist einen direkt beheizten Drehrohrofen auf, welcher einen Ofeneinlass und einen Ofenauslass besitzt. Hierbei ist der Drehrohrofen derart ausgebildet, dass das Aufgabematerial als Materialstrom vom Ofeneinlass zum Ofenauslass gefördert wird. Während dieser Förderung wird das Aufgabematerial thermisch behandelt, das heißt insbesondere auf Temperaturen oberhalb der Raumtemperatur erhitzt.

Ferner ist eine Gaszuführung am Ofenauslass und eine Gasabführung am Ofeneinlass vorgesehen. Die Tonkalzinierungsanlage ist derart ausgebildet, dass Kalzinierungsgas von der Gaszuführung durch den Drehrohrofen zur Gasabführung geleitet wird. Anders ausgedrückt, weist die Tonkalzinierungsanlage einen Drehrohrofen auf, der wie bekannte Drehrohrofen im Gegenstrom betrieben wird, wobei das Kalzinierungsgas dazu dient, das Aufgabematerial zu erhitzen.

Einer der weltweit größten CO₂-Produzenten ist die Zementindustrie. Hierbei entsteht beim Brennen von Klinker CO₂. Bei der Herstellung von 1 t Zement entsteht etwa 600 kg CO₂. Für das Jahr 2050 wird die Produktion von ca. 6 Milliarden Tonnen Zement prognostiziert.

Um hierbei Klinker im Zement zu ersetzen, bei dessen Herstellung das meiste CO₂ entsteht sind verschiedene Kompositmaterialien möglich und werden auch bereits eingesetzt.

Von allen theoretisch in Frage kommenden reaktiven Materialien stehen derzeit lediglich Flugasche (weltweit ca. 700 Mio. t/a) und Hüttensand (weltweit ca. 300 Mio. t/a) in relevanten Mengen zur Verfügung. Die Anfallmengen beider Stoffe sind dabei erheblichen konjunkturellen und jahreszeitlichen Schwankungen unterworfen. Ferner sind beide Stoffe, dies ist bereits heute absehbar, zukünftig nicht mehr in der derzeit vorhandenen Quantität und Qualität verfügbar.

Bei der Flugasche wird die Menge mit der zunehmenden Nutzung alternativer Energien gerade auch in Deutschland signifikant abnehmen. Die verbleibende Menge wird durch Änderungen im technologischen Prozess, wie dem Absenken der Kesseltemperaturen und dadurch einen geringeren Glasgehalt sowie dem Binden von Quecksilber durch zusätzliche Aktivkohle, nicht mehr uneingeschränkt nutzbar sein.

Die Mengen an Hüttensand werden aufgrund der wachsenden Schrottverwertung bei der Stahlherstellung ebenfalls tendenziell sinken. Andere mögliche reaktive Materialien wie Silicastaub, natürliche Puzzolane oder auch im asiatischen Raum Reisschalenasche spielen mit jährlichen Anfallmengen von deutlich unter 50 Mio. t/a für die Absenkung des Klinkeranteiles in Zementen allenfalls eine lokal begrenzte Rolle.

Natürlicher Kalkstein ist in nahezu unbegrenzter Menge verfügbar. Bedingt durch seine weitgehend inerten Eigenschaften ist die einsetzbare Menge als Klinkersubstitut jedoch stark beschränkt.

Eine weiteres Kompositmaterial sind kalzinierte Tone. Diese werden beim Tempern beziehungsweise Kalzinieren, welches in dieser Beschreibung alternativ zueinander verwendet wird, in Puzzolane umgewandelt beziehungsweise in Materialien mit puzzolanischen Eigenschaften.

Bisher ist die Verwendung von kaolinitreichen Tonen, die als Metakaolin entweder als Ersatz für Silicastaub in Hochleistungsbetonen oder als alumosilicatische Komponente in Geopolymeren zur Anwendung kommen, bekannt. Um kalzinierte Tone zukünftig auch als Hauptbestandteil im Zement zu nutzen, wird es allerdings notwendig sein, auch auf stärker verunreinigte Tone zurückzugreifen, die als Haupttonmineral nicht nur Kaolinit sondern auch Montmorillonit oder gar Illit aufweisen. Solche verunreinigten Tone sind sehr weit verbreitet und die Zementindustrie müsste darüber hinaus anders als bei kaolinitreichen Tonen nicht in einen kostenintensiven Wettbewerb mit anderen Industrien wie der Papierindustrie oder der keramischen Industrie treten.

Unter Kalzinieren beziehungsweise Tempern kann im Rahmen der Erfindung eine thermische Behandlung von über 400°C bezeichnet werden. Beim Kalzinieren von Ton treten grundsätzlich mehrere der folgenden Reaktionen auf: Abspalten von gebundenem Wasser oder anderen gasförmigen Stoffen, Phasenumwandlung, Amorphisierung, Rekristallisierung amorpher und schlechtkristallisierter Phasen sowie Kornwachstum und Sinterung, wobei letzteres für die Herstellung eines Kompositstoffes für Zement ungewünscht ist.

In ähnlicher Weise sind Rekristallisationsprozesse zu vermeiden, da diese das Bindungs- und Verfestigungspotential des aktivierten behandelten Tons zerstören würden.

Eine reine Entwässerung des Tons findet meist schon, abhängig von der exakten Zusammensetzung, im Bereich zwischen 150°C und 250°C statt. Die maximale Abgabe von Kristallwasser liegt bei etwa 565°C. Eine weitere Umwandlung in sogenannte Metatone, so werden aktivierte Tone bezeichnet, findet im Bereich von 600°C bis 900°C statt.

Oberhalb dieses Temperaturbereiches treten die zuvor beschriebenen weiteren Abläufe auf, die bei der Tonkalzinierung, also der Aktivierung von Ton, unerwünscht sind.

Daher ist es wesentlich, bei der Tonkalzinierung einen Temperaturgrenzbereich von etwa 900°C nicht zu überschreiten. Für eine reale durchschnittliche Tonzusammensetzung liegt die optimale Aktivierungstemperatur zwischen 600°C und 800°C. Bei herkömmlichen, direkt beheizten Drehrohröfen, welche eine lange offene Flamme im Drehrohrofen mit einer Temperatur von ca. 1700°C haben, tritt ein Überschreiten dieses Bereiches sehr leicht auf, da kaum Einfluss auf das exakte Temperaturprofil, insbesondere dessen Verteilung genommen werden kann. Oft liegt hier auch eine sehr ungleichmäßige Temperaturverteilung vor.

Sowohl aus der WO 2015/082075 A1 als auch aus der EP 3 828 151 A1 sind verschiedene Verfahren und Anlagen bekannt, um Ton zu kalzinieren.

Der Erfindung liegt daher die **Aufgabe** zugrunde, eine Tonkalzinierungsanlage zu schaffen, welche eine direkt beheizten Drehrohrofen aufweist, die eine effiziente Aktivierung des Tons ermöglicht.

Diese Aufgabe wird erfindungsgemäß durch eine Tonkalzinierungsanlage mit Merkmalen des Anspruchs 1 gelöst.

Vorteilhafte Ausführungsformen der Erfindung sind in den Unteransprüchen, der Beschreibung sowie den Figuren und deren Erläuterungen angegeben.

Die erfindungsgemäße Tonkalzinierungsanlage ist derart weitergebildet, dass die Gaszuführung des Drehrohrofens mit einer Mischkammer zum Erzeugen eines temperaturhomogenen beziehungsweise isothermen Stroms aus Kalzinierungsgas fluidtechnisch verbunden ist. Diese Mischvorkammer kann eine zylinderartige Form aufweisen. Grundsätzlich könnte die Form auch anders ausgeführt sein. An der Stirnseite der Mischkammer ist ein Brenner zum Erzeugen von heißem Rauchgas aus Verbrennungsgas als Energiequelle und Verbrennungsluft vorgesehen.

Außerdem weist die Mischkammer eine Prozessgaszuführung auf, um warmes Prozessgas zuzuführen. Hierzu können entsprechende Einrichtungen, wie beispielsweise Zuleitungen, vorgesehen sein, über die warmes Prozessgas aus vorgeschalteten, anderen Prozessen über die Prozessgaszuführung in die Mischkammer gelangen kann. Ferner ist die Prozessgaszuführung, der Brenner sowie die Mischkammer derart ausgebildet, dass zumindest im Bereich der Prozessgaszuführung eine spiralartige Strömung des warmen Prozessgases um das mittels des Brenners axial in die Mischkammer einströmenden heiße Rauchgas erzeugt wird. Hiermit kann der temperaturhomogene Strom von Kalzinierungsgas erzeugt werden.

Der Erfindung liegt die Idee zugrunde, von einer klassischen direkten Befeuerung eines Drehrohrofens abzuweichen. Entsprechend der Erfindung wird das Kalzinierungsgas, dies bedeutet, das heiße Gas mit einer Temperatur bevorzugt im Bereich zwischen 700°C und 950°C, insbesondere im Bereich zwischen 600°C und 850°C, in einer dem Drehrohrofen vorgeschalteten Einrichtung erzeugt. Entsprechend der Erfindung ist hierfür eine spezielle Mischkammer vorgesehen, die zum einen einen Brenner aufweist, welcher selbst einen Anteil des Kalzinierungsgases erzeugt, indem er Verbrennungsgas mit Verbrennungsluft zum Erzeugen von Rauchgas verbrennt. Zum anderen ist eine Prozessgaszuführung vorgesehen, über die warmes Prozessgas in die Mischkammer geleitet werden kann.

Dies reicht jedoch noch nicht aus, um den gewünschten temperaturhomogenen Strom von Kalzinierungsgas zu erzeugen. Hierfür ist außerdem eine äußerst gute Durchmischung des warmen Prozessgases mit dem Rauchgas aus den Brennern notwendig. Erfindungsgemäß wird dazu vorgeschlagen, das Prozessgas derart in die Mischkammer einzublasen beziehungsweise strömen zu lassen, dass sich dieses spiralförmig in einer Strömung um das Rauchgas des Brenners, welches bevorzugt axial eingeleitet wird, legt. Hierdurch werden starke Turbulenzen erzeugt, wodurch wiederum ein hoher Grad an Durchmischung erreicht wird. Weiterhin können auch anders gestaltete Mischkammern und/oder Mischkammereinbauten vorgesehen sein, so lange ein temperaturhomogener Strom von Kalzinierungsgas erzeugt wird.

Grundsätzlich kann der Brenner und die Prozesszuführung in der Mischkammer beliebig ausgelegt sein, solange die spiralartige Strömung erzeugt wird. In einer Ausführung kann der Brenner eine Brennerlanze mit entsprechender Brennerdüse aufweisen, die sich von der Stirnseite der Mischkammern in die Mischkammer erstreckt. Am Ende der Brennerlanze strömt so das heiße Rauchgas in die Mischkammer ein. Der Brenner kann bevorzugt axial und im Wesentlichen auf einer Rotationsachse der Mischkammer, das heißt mittig in der Mischkammer angeordnet sein. Ferner kann die Prozessgaszuführung weiter weg von der Stirnseite vorgesehen sein als der Austritt des heißen Rauchgases an der Brennerlanze. Dies ermöglicht erfahrungsgemäß eine noch bessere Durchmischung, so dass unter Umständen die Mischkammer auch kürzer ausgeführt sein kann.

Um die Mischung noch weiter zu verbessern, können Leitbleche und/oder Stauscheiben, insbesondere im Bereich des Eintrittes des Prozessgases durch die Prozessgaszuführung in die Mischkammer oder im Bereich des Austritts des Gases aus der Mischkammer vorgesehen sein. Diese können auch als Wirbelscheiben oder Nachmischerscheiben bezeichnet werden.

Bevorzugt ist es, wenn ein Prozessgaserzeuger vorgesehen ist, der dazu ausgebildet ist, Kalzinierungsgas, das von der Gasabführung stammt, mittels eines Prozessgasbrenners zu erhitzen, sowie wenn eine Mischkammerleitung vorgesehen ist, um das erhitzte Prozessgas als warmes Prozessgas zur Prozessgaszuführung der Mischkammer zu leiten. Das Vorsehen eines zweiten Brenners zum Erzeugen eines zweiten Gasstroms für die Mischkammer hat den Vorteil, dass ein größerer Regelungsbereich und eine bessere, einfachere Regelung für die Austrittstemperaturen an der Mischkammer möglich ist. Dadurch, dass im Prozessgasbrenner Kalzinierungsgas, welches bereits einmal durch den Drehrohrofen geleitet wurde, erneut erhitzt werden kann und dieses wiederverwendet wird, muss beispielsweise keine externe Luft erneut maximal erhitzt werden.

Ein weiterer Vorteil durch die Wiederverwendung des Kalzinierungsgases ist, dass darin befindliche Kohlenwasserstoff-Verbindungen zersetzt werden können und somit unschädlich gemacht werden. Dieses Unschädlichmachen ist notwendig, da zwangsläufig in einem weiteren Prozessschritt, wie später beschrieben, ein Teil der Kalzinierungsgase auch an die Umwelt abgegeben wird, und somit die entsprechenden umweltrechtlichen Vorschriften zu erfüllen sind.

Zusätzlich kann eine thermische Nachverbrennungseinrichtung mit einem thermischen Nachverbrenner vorgesehen sein. Hierzu ist eine Nachverbrennungsabzweigung in der Mischkammerleitung vom Prozessgaserzeuger zur Mischkammer vorgesehen. Aus dieser wird ein Teil des warmen Prozessgases aus der Mischkammerleitung abgezweigt und der thermischen Nachverbrennungseinrichtung zugeführt. Hierbei kann es sich bevorzugt um ein Verhältnis von 60:40 handeln, wobei 60% des warmen Prozessgases der Mischkammer zugeführt wird. Die thermische Nachverbrennungseinrichtung ist dazu ausgebildet, das zugeführte warme Prozessgas mittels des thermischen Nachverbrenners derart zu erhitzen, dass noch vorhandene umweltschädliche Stoffe in dem entstehenden Rauchgas verbrannt beziehungsweise zersetzt werden. Die Nachverbrennungseinrichtung wird mit einer deutlich höheren Temperatur und/oder einem höherem Sauerstoffgehalt als der Prozessgaserzeuger betrieben, so dass noch immer vorhandene schädliche Bestandteile im warmen Prozessgas komplett zersetzt werden und im Wesentlichen keine toxischen Verbindungen mehr vorliegen. Durch die Aufteilung in den Prozessgaserzeuger und die thermische Nachverbrennungseinrichtung wird erreicht, dass das warme Prozessgas, welches in die Mischkammern geleitet wird, keine zu hohen Temperaturen aufweist und so im weiteren Prozess besser und ohne zusätzliche Beeinflussung verwendet werden kann.

Um die Energieeffizienz der Tonkalzinierungsanlage weiter zu steigern, kann vor dem Ofeneinlass des Drehrohrofens ein Trockner, beispielsweise ein Trommeltrockner, angeordnet sein, wobei dass über den Ofeneinlass in den Drehrohrofen aufzugebende Aufgabematerial durch den Trockner transportiert wird und das Kalzinierungsgas aus der Gasabführung durch den Trockner geführt wird. Auf diese Weise kann das Aufgabematerial, welches in den Drehrohrofen über dem Ofeneinlass eingegeben wird, bereits vorgewärmt werden und so beispielsweise Oberflächenwasser verdampfen.

Eine weitere Möglichkeit, die Energieeffizienz der Tonkalzinierungsanlage zu verbessern ist, räumlich oberhalb des Drehrohrofens eine Vortrocknungseinrichtung für das Aufgabematerial anzuordnen, welche ausgebildet und eingerichtet ist, das Aufgabematerial mittels vom Drehrohrofen abgestrahlter Strahlungswärme und/oder freier Konvektion des Drehrohrofens vorzuwärmen beziehungsweise vorzutrocknen und dem Drehrohrofen und/oder dem Trockner zuzuführen.

Die Vortrocknungseinrichtung kann beispielsweise in Form eines eingehausten Stahlplattenbandes oberhalb des Drehrohrofens ausgeführt sein. So kann die Strahlungswärme des Drehrohrofens das Stahlplattenband erhitzen. In ähnlicher Weise können warme Gase, die um den Drehrohrofen strömen und von diesem erhitzt wurden, ebenfalls in die Einhausung gelangen, dort aufgefangen werden und so das Aufgabematerial bereits vorerwärmen und Oberflächenwasser und dergleichen zum Verdampfen bringen.

Bevorzugt ist es des Weiteren, wenn eine Steuer- und Regeleinrichtung vorgesehen ist, welche zumindest mittels des Brenners in der Mischkammer und der Menge und/oder der Temperatur des warmen Prozessgases die Temperatur des Kalzinierungsgases an der Gaszuführung zum Aktivieren des Aufgabematerials einstellt.

Wie bereits erläutert, ist es wesentlich, dass das Aufgabematerial, also der zu aktivierende Ton, auf eine Temperatur von etwa maximal 900°C erhitzt wird. Hierfür ist es essenziell sicherzustellen, dass - wie ausgeführt - keine zu hohen Temperaturen, jedoch auch keine zu niedrigen Temperaturen vorliegen. Aus diesem Grund wird über die Steuer- und Regeleinrichtung die Temperatur des Kalzinierungsgases entsprechend eingestellt. Hierfür wird zum einen der Brenner in der Mischkammer verwendet, der mittels seines Verbrennungsgases sowie seiner Verbrennungsluft eine unterschiedliche Menge an Rauchgas sowie auch unterschiedlich hohe Temperaturen des Rauchgases erzeugen kann. In ähnlicher Weise, kann auch die Menge und/oder die Temperatur des warmen Prozessgases, welches vom Prozessgaserzeuger stammt, eingestellt werden. Hierzu kann zum einen der Prozessgasbrenner entsprechend angesteuert werden. Zum anderen ist es möglich, auch die Menge des in die Messkammer geleiteten warmen Prozessgases zu beeinflussen. Insgesamt stellt die Steuer- und Regeleinrichtung hierdurch sicher, dass jeweils die optimale Temperatur an der Gaszuführung in den Drehrohrofen vorliegt.

Zusätzlich oder alternativ kann eine weitere Steuer- und Regeleinrichtung vorgesehen sein, welche zumindest mittels des Brenners in der Mischkammer und der Menge und/oder dem Sauerstoffgehalt des warmes Prozessgases den Sauerstoffgehalt des Kalzinierungsgases an der Gaszuführung zum Beeinflussen der Farbe des aktivierten Aufgabematerials einstellt. Bei der Steuer- und Regeleinrichtung kann es sich auch um eine kombinierte Steuer- und Regeleinrichtung mit der zuvor beschriebenen Steuer- und Regeleinrichtung handeln. Über die hier beschriebene Steuer- und Regeleinrichtung kann der Sauerstoffgehalt, das heißt ob das Kalzinierungsgas eine reduktive oder oxidative Atmosphäre erzeugt, eingestellt werden. Dies erfolgt wiederum beispielsweise, durch das Einstellen des Anteils an Verbrennungsluft , sowohl für den Brenner in der Mischkammer als auch für den Prozessgasbrenner. Anders ausgedrückt, kann der Lambdawert entsprechend eingestellt werden. Über das Verhältnis des Rauchgases zum warmen Prozessgas kann der Sauerstoffgehalt weiter beeinflusst werden. Über dies hinaus können auch die Kohlenwasserstoffe, welche aus dem Ton entweichen, für die Einstellung der benötigten Atmosphäre im Prozessgaserzeuger mit berücksichtigt.

In dem Aufgabegut ist Fe₂O₃ vorhanden. Dieses kann in einer reduktiven Atmosphäre zu Fe₃O₄, anschließend zu FeO umgewandelt werden. Fe₂O₃ weist eine Rot- bis Gelbfärbung auf. Diese ist in der Baustoffindustrie unerwünscht. Dem entgegen weist Fe₃O₄ und FeO diese Rot- bis Gelbfärbung nicht auf. Basierend auf der Einstellung des Sauerstoffgehaltes des Kalzinierungsgases kann somit die Farbe des kalzinierten Tons, also des aktivierten Aufgabegutes, eingestellt werden, welches im Anschluss der Zementindustrie zugeführt wird.

Stromabwärts des Materialstromes von aktiviertem Aufgabematerial aus dem Ofenauslass des Drehrohrofens ist ein Kühler, insbesondere ein Rostkühler, vorgesehen. Dieser ist ausgebildet, dass durch thermische Behandlung heißes, aktiviertes Aufgabematerial mittels Kühlluft innerhalb von zehn bis zwanzig Minuten auf eine Temperatur unter 400°C zu kühlen. Vorzugsweise weist das aktivierte Aufgabematerial am Ende des Kühlers eine Temperatur von etwa 100°C auf.

Mittels des Kühlers wird erreicht, dass der kalzinierte Ton entsprechend schnell abgekühlt wird, damit keine weitere Reaktion vorliegt, sodass sich die zuvor beschriebene Eisenreduktion zur Farbeinstellung nicht wieder umkehrt. Dies ist erfahrungsgemäß ab einer Temperatur von unter 400°C nicht mehr der Fall. Die Endtemperatur des Kühlers bemisst sich an den nachgeschalteten Prozessen-Aggregaten, welche idealerweise mit einer Temperatur im Bereich von 100°C das aktivierte Aufgabematerial weiterverarbeiten können.

Eine Möglichkeit, für ein derartiges Aggregat ist eine stromabwärts des Materialstroms nach dem Kühler vorgesehene Zerkleinerungseinrichtung, insbesondere eine Vertikalwälzmühle. Diese ist ausgebildet, das gekühlte und aktivierte Aufgabematerial auf eine Größe von maximal R60 µm < 15 % zu zerkleinern. Dies bedeutet, dass bei einem Sieb mit einer Maschenweite von 60µm maximal 15% des zu siebenden Materials im Sieb zurückbleiben. In anderen Worten, dass 85% des zerkleinerten Materials einen Durchmesser kleiner als 60 µm besitzen.

Es hat sich herausgestellt, dass aktivierter Ton mit einer derartigen Feinheit besonders gute puzzolanische Eigenschaften aufweist und damit sehr gut als Zusatzstoff oder Kompositmaterial für die Zementindustrie verwendet werden kann. Hierbei ist es auch bereits möglich, an dieser Stelle zusätzlich zum aktivierten Ton Klinkermaterialien und andere Zementbestandteile mit der Zerkleinerungseinrichtung gleichzeitig zu zerkleinern und somit, insbesondere bei der Verwendung einer Vertikalwälzmühle, die verschiedenen Materialien homogen zu vermischen. Dann entfällt die Notwendigkeit eines späteren separaten Mischvorganges. Hierfür kann der aktivierte Ton auch in ein Silo zwischengelagert werden. Auch können weitere Silos vorhanden sein, um beispielsweise Zementklinker und/oder weitere Materialien vorzusehen und in einem gewünschten Verhältnis der Vertikalwälzmühle aufzugeben.

Vorteilhaft ist es, wenn eine Entstaubungseinrichtung vorgesehen ist, welche zum Entstauben von Kalzinierungsgas aus dem Trockner und/oder dem Drehrohrofen eingerichtet und angeschlossen ist, sowie eine erste Rückführleitung vorgesehen ist, um den in der ersten Entstaubungseinrichtung abgeschiedenen Staub aus dem Kalzinierungsgas einem Materialstrom von aktiviertem Aufgabematerial vor dem Kühler und nach dem Drehrohrofen zuzuführen. Der vom Kalzinierungsgas aufgenommene und weitergeförderte Staub entsteht vornehmlich bei der thermischen Zerkleinerung des Tons durch das Austreiben von Kristallwasser und der dabei auftretenden Aufblähung des Tons. Zusätzlich entsteht Staub durch die Abriebwirkung infolge der Materialbewegung im Drehrohrofen.

Da der exakte Zustand des in der Entstaubungseinrichtung, welche beispielsweise als Zyklon ausgeführt sein kann, abgeschiedenen Staubes bezüglich seines Kalzinationsgrades nicht bekannt ist, wird der Staub in den Materialstrom aus heißem Aufgabematerial nach dem Drehrohrofen zugegeben, da die dort vorhandene Temperatur ausreichend ist, den sehr feinen Staub, sofern notwendig, ebenfalls zu kalzinieren. Daher findet diese Aufgabe vor dem Eintritt des Materialstromes in den Kühler statt, bevorzugt sogar in einer Entfernung vom Kühler, sodass die Wegstecke zum Kühler ausreichende ist, dass die Kalzination des Staubes noch durchgeführt werden kann.

Ferner kann eine zweite Entstaubungseinrichtung vorgesehen sein, welche zum Entstauben von Kühlluft aus dem Kühler eingerichtet und angeschlossen ist, sowie eine zweite Rückführleitung, um den in der zweiten Entstaubungseinrichtung abgeschiedenen Staub aus der Kühlluft einem Materialstrom von gekühltem, aktivierten Aufgabematerial nach dem Kühler zuzuführen.

In ähnlicher Weise wie im Drehohrofen entsteht auch während der Kühlung, insbesondere auf einem Rostkühler, Staub, der durch die Kühlluft mitgerissen wird. Hierbei handelt es sich um bereits kalziniertes Aufgabematerial, so dass dieses dem Materialstrom nach dem Kühler zugeführt werden kann.

Durch das Vorsehen von entsprechenden Entstaubungseinrichtungen, sind die verwendeten Träger- beziehungsweise Prozessgase im Wesentlichen nicht staubbeladen, so dass weniger Energie für deren Transport eingesetzt werden muss und auch weniger Verschleiß in den entsprechenden Gasleitungen auftritt.

Um zusätzlich den gesamten Prozess energiesparend auszugestalten, kann die Tonkalzinierungsanlage einen Wärmetauscher aufweisen, welcher eingerichtet ist, Verbrennungsluft für den Prozessgasbrenner, für den thermischen Nachverbrenner und/oder den Brenner in der Mischkammer vorzuwärmen. Dies kann mittels der Wärme des Rauchgases der thermischen Nachverbrennungseinrichtung erfolgen. Wie bereits beschrieben, dient die thermische Nachverbrennungseinrichtung dazu, einen Teil des warmen Prozessgases aus dem Prozessgaserzeuger zusätzlich weiter zu erhitzen, um eventuell noch vorhandene umweltschädliche Stoffe, wie entsprechende Kohlenwasserstoffe, zu zersetzen. Damit der Energiegehalt dieses Gases, welches so grundsätzlich der Umwelt unproblematisch zugeführt werden könnte, nicht verschwendet wird, ist der Wärmetauscher vorgesehen. Über das Vorwärmen der Verbrennungsluft und deren Verwendung in den vorhandenen Brennern kann Verbrennungsgas als Energieträger gespart werden, da zum Erreichen einer gewünschten Temperatur weniger zusätzliche Energie benötigt wird.

Eine weitere Möglichkeit, die Tonkalzinierungsanlage energieeffizienter zu betreiben, ist, mindestens einen Stromerzeuger vorzusehen, welcher mittels der warmen Kühlluft aus dem Kühler und/oder dem Rauchgas der thermischen Nachverbrennungseinrichtung Strom erzeugt. Hierbei kann das Rauchgas auch durch den bereits zuvor beschriebenen Wärmetauscher geführt worden sein. Sowohl die Kühlluft aus dem Kühler wie auch das Rauchgas der thermischen Nachverbrennungseinrichtung, welches durch den Wärmetauscher geleitet wurde, weisen noch eine deutlich höhere Temperatur auf als die Umgebungstemperatur. Diese Energie kann dazu verwendet werden, um Strom zu erzeugen, welcher entweder ins Netz eingespeist werden kann oder im Rahmen der Tonkalzinierungsanlage weiter eingesetzt werden kann.

Vorteilhafterweise ist eine Leitungsführung vorgesehen, um als Prozessgas für die Zerkleinerungseinrichtung Rauchgas aus der thermischen Nachverbrennungseinrichtung und/oder Kühlluft aus dem Kühler einzusetzen. Hierbei kann es sich auch um entsprechend abgekühltem Rauchgas oder Kühlluft handeln, die bereits über Stromerzeuger und/oder Wärmetauscher geleitet wurden. Die Zerkleinerungseinrichtung, beispielsweise einer Vertikalwälzmühle, benötigt Prozessgase mit einer Temperatur im Bereich von 95°C. Um diese nicht extra mit einem Heizgaserzeuger erzeugen zu müssen und somit zusätzliche Energie einzusetzen, kann bereits noch warmes Rauchgas oder die angewärmte Kühlluft aus dem Kühler verwendet werden.

Grundsätzlich spricht jedoch nichts dagegen, zusätzlich einen Heißgaserzeuger vorzusehen, um eine größere Flexibilität bei der Verwendung der Zerkleinerungseinrichtung zu haben.

Des Weiteren kann eine Leitungsführung vorgesehen sein, um zumindest teilweise von Staub gereinigtes Kalzinierungsgas aus der ersten Entstaubungseinrichtung dem Prozessgaserzeuger zuzuführen und/oder um die zumindest teilweise von Staub gereinigte Kühlluft aus der zweiten Entstaubungseinrichtung der Zerkleinerungseinrichtung als Prozessgas zuzuführen.

Durch die Weiterverwendung von entstaubtem Kalzinierungsgas beziehungsweise. entstaubter Kühlluft, kann wiederum die zusätzliche Erwärmung des Kalzinierungsgases beziehungsweise der Prozessluft für die Zerkleinerungseinrichtung minimiert werden. Da entstaubtes Gas/Luft verwendet wird, wird weniger Energie für die pneumatische Förderung benötigt.

Um die schon entstaubte Prozessluft beziehungsweise Gase der gesamten Tonkalzinierungsanlage von Feinstoffen zu reinigen, kann es vorgesehen sein, nach der Zerkleinerungseinrichtung eine entsprechende Filtereinrichtung vorzusehen, welche die endgültige Entstaubung der Gase durchführt, bevor diese entweder erneut in die Tonkalzinierungsanlage eingeleitet werden oder über einen Kamin entsorgt werden. Durch die beschriebene Kopplung der einzelnen Prozessstufen, entsprechend der vorgesehenen Leitungsführung, gibt es nur eine Stelle der Restentstaubung der Prozessgase. Zwischenreinigungen sind somit nicht erforderlich.

Die Erfindung wird nachfolgend anhand eines schematischen Ausführungsbeispiels unter Bezugnahme auf die Figuren erläutert. Hierbei zeigen:

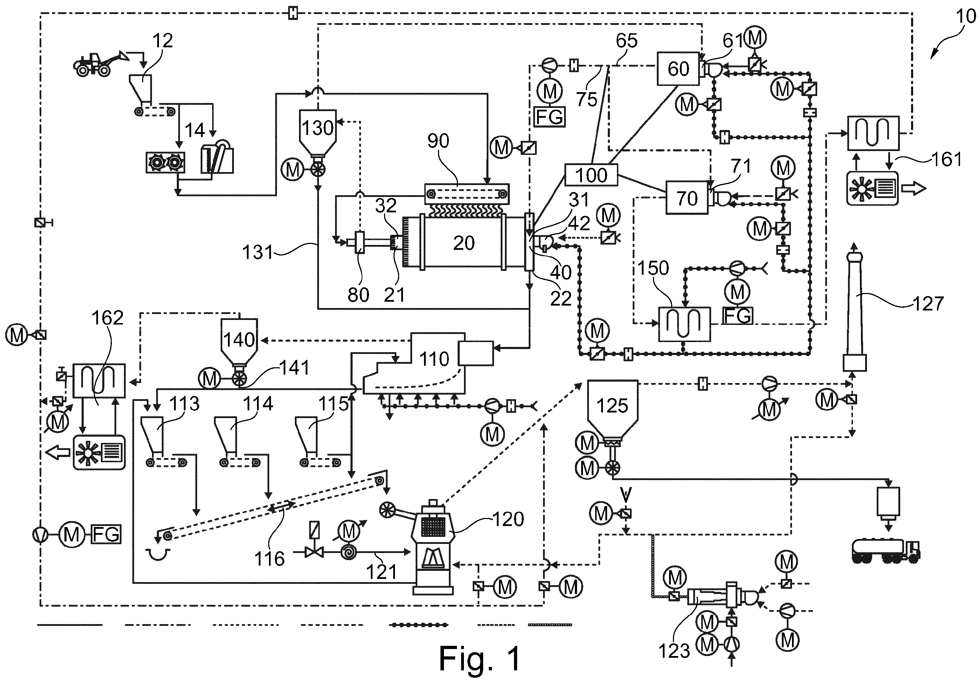

- Fig. 1: einen stark schematisierten und vereinfachten Aufbau einer erfindungsgemäßen Tonkalzinierungsanlagen; und
- Fig. 2: ein Schema einer erfindungsgemäßen Mischkammer.
Unter Bezugnahme auf Fig. 1 wird nun der grundlegende Aufbau und die Funktionsweise einer erfindungsgemäßen Tonkalzinierungsanlage 10 näher erläutert.

Zunächst wird dem Materialstrom des zu kalzinierenden Tons in der Tonkalzinierungsanlage 10 folgend die Aggregate, die der Materialstrom hierbei passiert, näher erläutert. Anschließend werden die vorhandenen Prozessgasströme sowie eine zentrale Steuer- und Regeleinrichtung 100 erklärt. Zu berücksichtigen ist, dass in diesem Fall als Prozessgas jegliches hier verwendete Gas bezeichnet werden kann, wobei im Folgenden verschiedene Gasströme genauer unterschieden werden.

Zuerst wird der zu aktivierende Ton mit einer Feuchte von 5% bis 30% einem Aufgabebunker 12 aufgegeben. Aus diesem wird er abgezogen und Grobzerkleinerungsaggregaten 14 zugeführt. Dabei könnten unterschiedliche Zerkleinerungsaggregate abhängig von der Feuchte des Tons, welcher auch als Aufgabematerial bezeichnet wird, verwendet werden. Beispielsweise kann für feuchteren Ton ein Querhaspelwerk und bei trockenerem Ton ein Backenbrecher verwendet werden. In diesen Vorzerkleinerungsaggregaten 14 wird der Ton auf eine Größe im Bereich von 100 mm oder kleiner bevorzugt 50 mm oder kleiner vorzerkleinert.

Anschließend wird der vorzerkleinerte Ton einer Vortrocknungseinrichtung 90 zugeführt. Die Vortrocknungseinrichtung 90 befindet sich über dem zentralen Aggregat der erfindungsgemäßen Tonkalzinierungsanlage 10 einem Drehrohrofen 20.

Die Vortrocknungseinrichtung 90 dient dazu, Energie in Form von Wärme, welche durch den Drehrohrofen 10 abgestrahlt wird, zu nutzen, um das zerkleinerte Aufgabegut vorzuwärmen und bereits oberflächliches Wasser zu verdampfen. Hierzu kann die Vortrocknungseinrichtung 90 beispielsweise als eingehaustes Stahlplattenband ausgelegt sein. Das Stahlplattenband wird zum einen durch direkt abgestrahlte Wärme vom Drehrohrofen erwärmt und gibt diese Wärme an den vorzerkleinerten Ton weiter: Zum anderen wird durch die Einhausung aufsteigende warme Luft, Konvektion, vom Drehrohrofen abgefangen, so dass in der Einhausung eine warme Atmosphäre vorhanden ist, die ebenfalls zum Vorwärmen des vorzerkleinerten Tons verwendet wird.

Im Anschluss wird der so vorbehandelte Ton zu einem Trockner 80 weitergeleitet, der direkt vor dem Drehrohrofen 20 angeordnet ist. Der Drehrohrofen 20 wird als direkt beheizter Drehrohrofen betrieben. Dies bedeutet, dass zu behandelndes Material an einem Ofeneinlass 21 in den Drehrohrofen 20 eingegeben wird, durch diesen durch seine Drehung und Neigung gefördert wird und an einem Ofenauslass 22 den Drehrohrofen 20 wiederum verlässt. In Gegenrichtung zu diesem Materialstrom strömt ein Prozessgas durch den Drehrohrofen 20, welches entsprechend der Erfindung zur Kalzinierung verwendet wird und daher im Folgenden als Kalzinierungsgas bezeichnet wird. Dieses Kalzinierungsgas strömt an einer Gaszuführung 31 am Ende des Drehrohrofen 20, an dem der Ofenauslass 22 liegt, ein. Es durchströmt den Drehrohofen 20 und verlässt ihn wieder an einer Gasabführung 32, welche auf der Seite des Ofeneinlasses 21 liegt. Das den Drehrohrofen 20 verlassende Kalzinierungsgas wird durch den Trockner 80 geleitet. Der Trockner 80 kann beispielsweise als Trommeltrockner ausgeführt sein. Die im Trockner 80 verwendeten Kalzinierungsgase verlassen diesen mit einer Temperatur von ca. 400°C. Im Trockner 80 wird das Aufgabematerial vor Aufgabe in den Drehrohrofen 20 weiter vorgewärmt.

Das Kalzinierungsgas tritt in dem Drehrohrofen 20 durch die Gaszuführung 31 ein. Dies erfolgt als temperaturhomogener Kalzinierungsgasstrom. Dies bedeutet, dass das einströmende Kalzinierungsgas eine homogene Temperatur sowohl über die Zeit als auch über das gesamte Volumen aufweist. Diese Temperatur ist abhängig vom zu kalzinierenden Ton und liegt im Bereich von 600°C bis 900°C.

Durch den Kontakt des vorgewärmten und vorzerkleinerten Tons im Drehrohofen 20 mit dem Kalzinierungsgas findet eine Entwässerung sowohl des oberflächlichen Wassers als auch des Kristallwassers statt. Auch findet die Umwandlung in ein Material mit puzzolanischen Eigenschaften statt, welches als Metakaolin oder Metaton bezeichnet werden kann.

Direkt vor Ofenauslass 22, der auch als Auslauf bezeichnet werden kann, dem Drehrohofen 20 ist eine Mischkammer 40 angeordnet, welche dazu dient, den temperaturhomogenen Strom von Kalzinierungsgas, welches durch die Gaszuführung 31 in den Drehrohrofen 20 strömt, zu erzeugen beziehungsweise vorzumischen. Grundsätzlich kann die Mischkammer jedoch auch etwas entfernt vom Drehrohrofen 20 angeordnet sein.

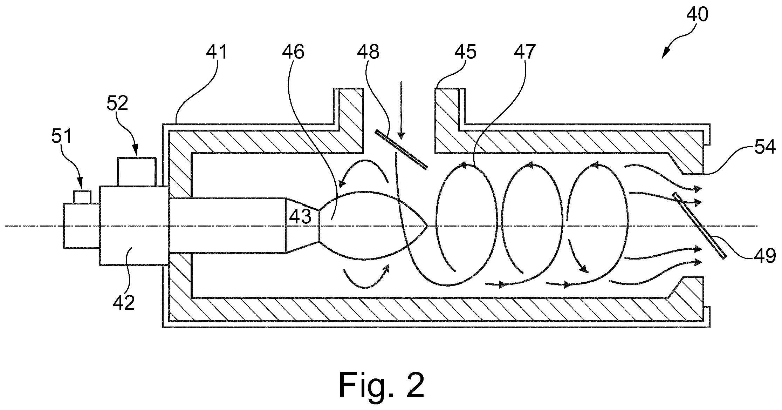

Die Mischkammer 40 ist in Fig. 2 in einer weiteren Skizze detaillierter dargestellt. Sie kann eine im Wesentlichen zylindrische Form aufweisen. An einer ersten Stirnseite 41 ist ein Brenner 42 vorgesehen, welcher eine Verbrennungsgaszuführung 51 sowie eine Verbrennungsluftzuführung 52 aufweist. Vom Brenner 42 aus erstreckt sich eine Lanze mit Brennerdüse 43 in den Raum der Mischkammer 40.

Ist der Brenner 42 gezündet, strömen durch den Brenner 42 erhitztes Rauchgas 46 in die Mischkammer 40 ein. Hierbei ist die Brennerlanze 43 bevorzugt axial auf der zentralen Rotationsachse der Mischkammer 40 angeordnet, so dass auch das erzeugte Rauchgas 46 in Richtung der Rotationsachse eintritt. Als Rauchgas 46 kann Gas bezeichnet werden, das bei der Verbrennung von Verbrennungsgas, wie Erdgas, mit Verbrennungsluft entsteht.

Zusätzlich weist die Mischkammer 40 eine Prozessgaszuführung 45 auf, durch die, wie später näher erläutert, warmes beziehungsweise heißes Prozessgas in die Mischkammer 40 einströmen kann. Hierbei ist die Prozessgaszuführung 45 derart ausgelegt, dass beim Einströmen bevorzugt eine spiralartige Luftströmung 47 erzeugt wird, die sich um das Rauchgas 46 legt. So wird eine äußerst gute Vermischung angeregt, so dass am Ausgang 54 der Mischkammer 40 ein temperaturhomogener Gasstrom, bevorzugt mit einer Temperatur von im Bereich zwischen 750°C und 1000°C, vorliegt. Dieser Gasstrom wird dann direkt in den Drehrohrofen 20 eingedüst.

Um die Vermischung noch weiter zu verbessern, können sowohl in der Prozessgaszuführung 45 als auch alternativ oder zusätzlich direkt in der Mischkammer 40 Stauscheiben 48 und/oder Leitbleche vorgesehen sein, um insbesondere das einströmende Prozessgas mit einem Drall beziehungsweise Verwirbelungen zu versehen und so die intensive Vermischung begünstigen. Auch ist es möglich alternativ oder zusätzlich am Ausgang 54 der Mischkammer 40 eine Nachmischerscheibe 49 vorzusehen.

Auf die Herkunft des verwendeten Prozessgases wird später näher eingegangen. Nun wird dem Materialstrom des kalzinierten Tons aus dem Drehrohrofen 20 weiter gefolgt. Dieser verlässt den Drehrohrofen 20 mit einer Temperatur je nach kalzinierter Tonart und Zusammensetzung von zwischen 650°C und 850°C. Der kalzinierte Ton wird zum Abkühlen einem Kühler 110 aufgegeben, bei dem es sich bevorzugt um einen Rostkühler handelt. Dieser wird von Kühlluft durchströmt und kühlt den kalzinierten Ton in einem Zeitraum von unter 20 Minuten, bevorzugt unter 10 Minuten, auf unter 400°C ab. Dies dient zum einen dazu, den kalzinierten Ton für die weitere Bearbeitung mit einer optimalen Temperatur vorzubereiten. Er kann in diesem Zusammenhang auch noch weiter auf ca. 100°C abgekühlt werden. Zum anderen wird hierdurch verhindert, dass eine Umkehr der Eisenreduktion auftritt, welche später in Bezug auf die Regelung genau beschrieben wird. Hierfür ist eine zügige Kühlung des kalzinierten Tons notwendig.

Nach dem Kühler 110 kann der gekühlte kalzinierte Ton direkt einem Zerkleinerungsaggregat in Form beispielsweise einer Vertikalwälzmühle 120, insbesondere nach dem Loesche-Prinzip, zugeführt werden. Es ist jedoch auch möglich, den abgekühlten kalzinierten Ton in einem Bunker 113 zwischenzulagern. Es können auch mehrere verschiedene Bunker 114, 115 vorgesehen sein. So ist es beispielsweise möglich, im Bunker 114 Klinker vorzusehen und in Bunker 115 Gips, welche über ein Transportband 116 gemischt werden und der Mühle 120 entsprechend aufgegeben werden können.

In der Mühle 120 wird der kalzinierte Ton mit den fakultativen weiteren Stoffen zerkleinert. Hierbei ist eine Zerkleinerung auf etwa R60µm < 15% bevorzugt. Mit dem Prozessgas der Mühle 120, welches verwendet wird, um die Mühle im Umluftbetrieb zu betreiben, wird der kalzinierte und zerkleinerte Ton mit den weiteren fakultativen Materialien zu einem Filter 125 transportiert, in dem er von dem ihn transportierenden Prozessgas getrennt wird. Dieser Filter 125 kann beispielsweise als Schlauchfilter ausgeführt sein. Über den Filter 125 wird das so aufbereitete Material, welches nun als Zementersatz oder Zementzuschlag bezeichnet werden kann, der Zementherstellung zugeführt werden.

Bezüglich des Bunkers oder Silos 114 wurde erwähnt, dass hierin Gips vorhanden sein kann. Bei der Verwendung von Gips ist es notwendig, dass dieser ebenfalls entwässert wird. Oft wird die Mühle 120 in einem Temperaturbereich um 95°C betrieben. Dies reicht erfahrungsgemäß nicht sicher aus, um Gips zu entwässern. Daher kann es entsprechend der erfindungsgemäßen Tonkalzinierungsanlage 10 vorgesehen sein, dass der Gips aus dem Bunker 115 auch in den Kühler 110 zugeführt wird. Hierbei folgt die Zuführung an einer geeigneten Stelle, an der der kalzinierte Ton noch eine ausreichend hohe Temperatur von etwa 150°C bis 180°C hat, um den Gips ebenfalls zu entwässern.

Nun wird detaillierter auf die Luft- beziehungsweise auf die Gasströme in der erfindungsgemäßen Tonkalzinierungsanlage 10 eingegangen. Die folgende Beschreibung beginnt hierzu im Drehrohrofen 20. Das Kalzinierungsgas, welches im Drehrohrofen 20 mit einer Temperatur im Bereich zwischen 600°C und 900°C durch die Gaszuführung 31 eingeströmt ist, strömt in gegensätzlicher Richtung zum Materialstrom des zu kalzinierenden Tons durch den Drehrohrofen 20 und gibt seine Wärme dabei an den zu kalzinierenden Ton und den Drehrohrofen 20 ab. Am Gasauslass 32 hat das Kalzinierungsgas nun eine Temperatur im Bereich zwischen 500°C und 700°C. Nachdem es zusätzlich Wärme im Trockner 80 abgegeben hat, wird das erkaltete Kalzinierungsgas an eine erste Entstaubungseinrichtung 130 weitergeleitet. Hierbei kann es sich beispielsweise um einen Zyklon handeln. Dort werden ca. 95% des Staubes abgeschieden. Der Staub entsteht im Drehrohrofen 20 durch die thermische Zerkleinerung und Kalzinierung des Tons, da bei niedrigeren Temperaturen Feuchte und bei höheren Temperaturen Kristallwasser ausgetrieben und sich der Ton dabei aufbläht. Es werden auch kleinste Tonpartikel im Gegenstrom von dem Kalzinierungsgasstrom mitgerissen.

Der von der ersten Entstaubungseinrichtung 130 abgeschiedene Ton wurde bereits einer gewissen Temperatur ausgesetzt, da er bereits Schritte des Kalzinierungsprozesses im Drehrohrofen 20 durchlaufen hat. Jedoch ist nicht sichergestellt, dass der Tonstaub auch vollkommend kalziniert ist. Aus diesem Grund wird über eine erste Entstaubungsleitung 131 der in der ersten Entstaubungseinrichtung 130 abgeschiedene Tonstaub dem Materialstrom direkt nach dem Drehrohrofen 20 idealerweise im Bereich des Drehrohrofenauslasses 22 zugeführt. Der Ton aus dem Drehrohrofen 20 hat hier eine Temperatur im Bereich von 800°C, so dass aufgrund der geringen Partikelgröße des Staubs sichergestellt ist, dass dieser, sollte er noch nicht kalziniert sein, ebenfalls kalziniert wird.

Das entstaubte Kalzinierungsgas aus der Entstaubungseinrichtung 130 wird einem Prozessgaserzeuger 60 zugeführt. Im Prozessgaserzeuger 60 wird das erkaltete Kalzinierungsgas mittels eines vorgesehenen Prozessgasbrenners 61 zusammen mit den durch den Prozessgasbrenner 61 erzeugten Rauchgasen auf eine Temperatur von etwa 750°C erwärmt. Hierzu wird entsprechendes Verbrennungsgas und eine Verbrennungsluftzuführung verwendet. Durch diese Erwärmung werden bereits im erkalteten Kalzinierungsgas vorhandene Schadstoffe zum Teil beseitigt. Insbesondere werden hier umweltschädliche Kohlenwasserstoffverbindungen zerstört.

Das im Prozessgaserzeuger 60 erhitzte Prozessgas wird dann über eine Mischkammerleitung 65 der Mischkammer 40 über die Prozessgaszuführung 65 zugeführt. Beim Eintritt in die Mischkammer 40 hat das nun warme Prozessgas eine Temperatur von ca. 650°C.

In der Mischkammerleitung 65 ist eine Nachverbrennerabzweigung 75 vorgesehen. Mittels dieser wird ein Teil des erhitzten Prozessgases aus der Mischkammerleitung 65 abgezweigt und zu einer thermischen Nachverbrennungseinrichtung 70 geführt. Hierbei wird ca. 60% des erhitzten Prozessgases zur Mischkammer 40 geleitet und die restlichen etwa 40% zur thermischen Nachverbrennungseinrichtung 70.

Die thermische Nachverbrennungseinrichtung 70 weist ebenfalls einen Brenner, in diesem Fall einen Nachverbrenner 71 auf, der wiederum mit Verbrennungsluft sowie mit einem entsprechend brennbaren Gas betrieben wird. In diesem wird das abgezweigte Prozessgas mittels der durch den Nachverbrenner 71 erzeugten Wärme und Rauchgas auf eine Temperatur von mindestens 850°C erhitzt und mindestens 2 Sekunden gehalten. Dieses weitere zweite Erhitzen dient dazu, noch nicht zerstörte Schadstoffe, die sich in dem Prozessgas befinden, zu zerstören.

Im Anschluss wird das so durch die thermische Nachverbrennungseinrichtung 70 gereinigte Prozessgas einem Wärmetauscher 150 zugeführt. Dieser dient dazu, die Wärmeenergie des aus der Nachverbrennungseinrichtung 70 stammenden Gases zu verwenden, um Verbrennungsluft von zumindest einem, bevorzugt allen drei in der erfindungsgemäßen Tonkalzinierungsanlage 10 vorgesehenen Brenner vorzuwärmen, um deren Energieverbrauch zu verringern. Bei den Brennern handelt es sich um den Brenner 42 in der Mischkammer, um den Prozessgasbrenner 61 des Prozessgaserzeugers sowie um den Nachverbrenner 71 der thermischen Nachverbrennungseinrichtung 70.

Mittels des Wärmetauschers 150 kann die Verbrennungsluft auf eine Temperatur von etwa 400°C aufgeheizt werden. Die ehemals heißen Gase aus der thermischen Nachverbrennungseinrichtung 70 haben an dieser Stelle nach dem Verlassen des Wärmetauschers 150 eine Temperatur von etwa 350°C.

Um diese Energie weiter zu nutzen, wird das Gas zu einem Stromerzeuger 161 weitergeleitet, in dem die Wärmeenergie in Strom umgewandelt wird. Das nun vorhandene Gas, welches im Folgenden als Prozessgas bezeichnet wird, wird mit einer Temperatur von etwas über 100°C an die Mühle 120 weitergeleitet.

Die Luft, die zum Betrieb des Kühlers 110 als Kühlluft verwendet wird, wird durch den kalzinierten Ton ebenfalls auf ca. 400°C erwärmt, da hier eine Wärmeübertragung stattfindet. Zusätzlich ist die Luft durch den staubbehafteten Ton ebenfalls staubbeladen. Aus diesem Grund ist eine zweite Entstaubungseinrichtung 140 vorgesehen, die ebenfalls als Zyklon ausgeführt sein kann. Die erwärmte Kühlluft aus dem Kühler 110 wird der zweiten Entstaubungseinrichtung 140 zugeführt und dort entstaubt. Der rückgewonnene Staub wird mittels einer zweiten Entstaubungsleitung 141 direkt dem Materialstrom des kalzinierten Tons nach dem Kühler 110 zugeführt. Die im Wesentlichen entstaubte Luft, die jeweils eine deutlich höhere Temperatur als die Umgebung hat, kann dann ebenfalls einem Stromerzeuger 162 zugeführt werden, um aus der Wärmeenergie Strom zu gewinnen, der für die Tonkalzinierungsanlage 10 eingesetzt werden kann.

Das durch die Stromgewinnung abgekühlte Kühlgas wird nun ebenfalls an die Mühle 120 weitergeleitet. Das Kühlgas hat eine Temperatur, die im Bereich von etwas über 100°C liegt. Das so in die Mühle 120 eintretende Prozessgas ist durch die erste Entstaubungseinrichtung 130 beziehungsweise die zweite Entstaubungseinrichtung 140 größtenteils entstaubt worden. Es weist jedoch noch sehr feine Staubpartikel auf.

Um das Prozessgas, welches in die Mühle 120 strömt, wenn notwendig weiter abzukühlen kann eine Wassereinspeisung 121 vorgesehen sein
Um die Menge des Prozessgases, welche in die Mühle 120 strömt zu regeln, ist zusätzlich eine Bypassleitung um die Mühle zum Filter 125 vorgesehen.

Mittels der Mühle 120 wird der kalzinierte Ton zerkleinert und mit dem eingeblasenen Prozessgas zum Filter 125 transportiert. In diesem findet eine im Wesentlichen komplette Entstaubung der Prozessluft statt, so dass die Prozessluft nach dem Filter 125 über einen Kamin 127 ausgeblasen werden kann. Wie zuvor bereits beschrieben, stammt diese Luft entweder aus der Kühlluft des Kühlers 110 oder ist von der thermischen Nachverbrennungseinrichtung 70 behandelt worden, so dass keine umweltschädlichen Gase mehr vorliegen. Durch die beschriebene Kopplung der einzelnen Prozessstufen, entsprechend der vorgesehenen Leitungsführung, gibt es nur eine Stelle der Restentstaubung der Prozessgase. Zwischenreinigungen sind somit nicht erforderlich.

In der dargestellten Ausführungsform ist zusätzlich ein Heißgaserzeuger 123 vorgesehen, welcher in einer Rezirkulierungsleitung von der entstaubten Luft aus dem Filter 125 vorgesehen ist und zusätzlich die Prozessluft für die Mühle 120 erhitzen kann. Dies ist dann sinnvoll, wenn die Tonkalzinierungsanlage 10 noch nicht ausreichend warme Prozessluft erzeugt oder um die Mühle 120 separat zu verwenden.

Im Folgenden wird auf die zentrale Regel- und Steuereinrichtung 100 näher eingegangen. Neben einigen anderen Regel- und Steuerungsaufgaben hat diese im Wesentlichen zwei zentrale Aufgaben: Zum einen ist die Regel- und Steuereinrichtung 100 dafür zuständig, dass der Kalzinierungsgasstrom, welcher durch die Gaszuführung 31 in den Drehrohrofen 20 strömt, eine gewünschte Temperatur im Bereich zwischen 600°C und 900°C aufweist. Hierdurch wird erreicht, dass das Aufgabematerial auf die gewünschte Temperatur zwischen 650°C und 850°C erwärmt wird. Zum anderen dient die Regel- und Steuereinrichtung 100 dazu, den Sauerstoffgehalt des Kalzinierungsgases beim Einströmen in den Drehrohrofen 20 festzulegen.

Zum Einstellen der Temperatur kann über die Regel- und Steuereinrichtung 100 sowohl die Temperatur des Brenners 42 der Mischkammer 40 als auch die Menge des entstehenden Rauchgases 46 eingestellt werden. Zusätzlich kann über entsprechende Ventile die Menge des über die Prozessgaszuführung 45 zugeführten warmen Prozessgases aus dem Prozessgaserzeuger 60 eingestellt werden. Die Temperatur dieses Prozessgases kann über die Brennertemperatur des Prozessgasbrenners 61 wiederum variiert werden. Insgesamt wird durch diese Regelgrößen erreicht, dass am Ausgang der Mischkammer 40 beziehungsweise an der Gaszuführung 31 des Drehrohrofens 20 eine optimale Temperatur für den Kalzinierungsprozess des Tons vorliegt.

Eine weitere Aufgabe der Regel- und Steuereinrichtung 100 ist es, den Sauerstoffgehalt des Kalzinierungsgases, welches in den Drehrohrofen 20 strömt, einzustellen. Während der Kalzinierung des Tons findet in einer reduktiven Atmosphäre eine Umwandlung von vorhandenem Fe₂O₃ zu Fe₂O₄ und im Anschluss FeO statt. Fe₂O₃ führt zu einer Rot- beziehungsweise Gelbfärbung, die in der Baustoffindustrie unerwünscht ist, so dass bevorzugt im kalzinierten Ton Fe₃O₄ beziehungsweise FeO vorliegen sollte.

Aus diesem Grund sollte das Kalzinierungsgas einen besonders geringen Sauerstoffanteil aufweisen. Der Sauerstoffanteil des Kalzinierungsgases wird daher über die Regel- und Steuereinrichtung 100 entsprechend eingestellt. Als Einstellparameter hierzu dient wiederum die Betriebsweise des Brenners 42 der Mischkammer 40. Hier kann durch das Verhältnis von Verbrennungsgas und Verbrennungsluft der Sauerstoffgehalt des Rauchgases 46 beeinflusst werden. In ähnlicher Weise kann auch der Sauerstoffgehalt des warmen Prozessgases, welches aus dem Prozessgaserzeuger 60 stammt, über die Brennertemperatur des Prozessgasbrenners 61 sowie über dessen Anteile an Verbrennungsluft eingestellt werden. Hierzu kann zusätzlich im Prozessgaserzeuger 60 eine sekundäre Prozessgaszuführung vorgesehen sein.

Mittels der erfindungsgemäßen Tonkalzinierungsanlage ist es möglich, Ton mit einem Drehrohrofen in sehr guter Qualität zu kalzinieren. Zusätzlich ist durch die gesamte Auslegung der Anlage ein energieeffizientes Verfahren beschrieben, wobei Einzelteile und Einzelschritte auch separat angewendet werden können und nicht alle einzelnen beschriebenen Elemente immer notwendig sind. Es ist somit nicht erforderlich, zwingend alle Einzelbauteile der Anlage in Kombination zu verwenden, beispielsweise kann auf die Stromerzeuger oder den Wärmetauscher verzichtet werden. Auch die thermische Nachverbrennungseinrichtung ist beispielsweise abhängig von den landestypischen Umweltvorschriften nicht immer erforderlich.

## Patentansprüche

1. Tonkalzinierungsanlage (10) zum Aktivieren von Ton als Aufgabematerial, welcher einen signifikanten Anteil von mindestens 40% thermisch aktivierbare Schichtsilikate in Form von Kaolinit, Illit und/oder Montmorillonit aufweist,
mit einem direkt beheizten Drehrohrofen (20), der einen Ofeneinlass (21) und einen Ofenauslass (22) aufweist, wobei der Drehrohrofen (20) ausgebildet ist das Aufgabematerial als Materialstrom vom Ofeneinlass (21) zum Ofenauslass (22) zu fördern und während der Förderung thermisch zu behandeln,
**dadurch gekennzeichnet,**
**dass** eine Gaszuführung (31) am Ofenauslass (22) und eine Gasabführung (32) am Ofeneinlass (21) vorgesehen ist,
**dass** die Tonkalzinierungsanlage ausgebildet ist, Kalzinierungsgas von der Gaszuführung (31) durch den Drehrohrofen (20) zur Gasabführung (32) zu leiten, dass die Gaszuführung (31) des Drehrohrofen (20) mit einer Mischkammer (40) zum Erzeugen eines temperaturhomogenen Stroms aus Kalzinierungsgas fluidtechnisch verbunden ist,
**dass** die Mischkammer (40) eine zylinderartige Form aufweist,
**dass** an einer Stirnseite (41) der Mischkammer (40) ein Brenner (42) zum Erzeugen von heißem Rauchgas (46) aus Verbrennungsgas als Energiequelle und Verbrennungsluft, vorgesehen ist,
**dass** die Mischkammer (40) eine Prozessgaszuführung (45) zum Zuführen von warmen Prozessgas aufweist,
**dass** die Tonkalzinierungsanlage dazu ausgebildet ist, warmes Prozessgas durch die Prozessgaszuführung (45) in die Mischkammer (40) zuzuführen,
**dass** die Prozessgaszuführung (45), der Brenner (42) und die Mischkammer (40) ausgebildet sind, eine zumindest im Bereich der Prozessgaszuführung (45) spiralartige Strömung (47) des warmen Prozessgases, um das mittels des Brenners axial in die Mischkammer (40) einströmende heiße Rauchgas (46) zu erzeugen, um den temperaturhomogenen Strom von Kalzinierungsgas zu erzeugen.

2. Tonkalzinierungsanlage (10) nach Anspruch 1,
**dadurch gekennzeichnet,**
**dass** ein Prozessgaserzeuger (60) vorgesehen ist, der dazu ausgebildet ist, Kalzinierungsgas von der Gasabführung (32) mittels eines Prozessgasbrenners (61) zu erhitzen und
**dass** eine Mischkammerleitung (65) zum Zuführen des erhitzten Prozessgases als warmes Prozessgas zur Prozessgaszuführung (45) in die Mischkammer (40) vorgesehen ist.

3. Tonkalzinierungsanlage (10) nach Anspruch 2,
**dadurch gekennzeichnet,**
**dass** eine thermische Nachverbrennungseinrichtung (70) mit einem thermischen Nachverbrenner (71) vorgesehen ist,
**dass** eine Nachverbrennungsabzweigung (75) in der Mischkammerleitung (65) vorgesehen ist, um ein Teil des warmen Prozessgases aus der Mischkammerleitung (65) abzuzweigen und der thermischen Nachverbrennungseinrichtung (70) zuzuführen,
**dass** die thermische Nachverbrennungseinrichtung (70) eingerichtet ist, das zugeführte warme Prozessgas mittels des thermischen Nachverbrenners (71) derart zu erhitzen, um umweltschädliche Stoffe in dem entstehenden Rauchgas (46) zu verbrennen.

4. Tonkalzinierungsanlage (10) nach einem der Ansprüche 1 bis 3, dadurch**gekennzeichnet**,
dass vor dem Ofeneinlass (21) des Drehrohrofens (20) ein Trockner (80) derart angeordnet ist,
dass über dem Ofeneinlass (21) in den Drehrohrofen (20) aufzugebendes Aufgabematerial durch den Trockner (80) transportiert wird und
dass Kalzinierungsgas aus der Gasabführung (32) durch den Trockner (80) geführt wird.

5. Tonkalzinierungsanlage (10) nach einem der Ansprüche 1 bis 4, dadurch**gekennzeichnet**,
dass räumlich oberhalb des Drehrohrofens (20) eine Vortrocknungseinrichtung (90) für das Aufgabematerial angeordnet ist, welche ausgebildet und eingerichtet ist das Aufgabematerial mittels vom Drehrohofen abgestrahlter Strahlungswärme und/oder freier Konvektion des Drehrohofen (20) vor zu trocknen und dem Drehrohofen (20) und/oder dem Trockner (80) zuzuführen.

6. Tonkalzinierungsanlage (10) nach einem der Ansprüche 1 bis 5, dadurch**gekennzeichnet**,
dass eine Steuer- und Regeleinrichtung (100) vorgesehen ist, welche zumindest mittels des Brenners (42) in der Mischkammer (40) und der Menge und/oder der Temperatur des warmen Prozessgases die Temperatur des Kalzinierungsgases an der Gaszuführung (31) zum Aktivieren des Aufgabematerials einstellt.

7. Tonkalzinierungsanlage (10) nach einem der Ansprüche 1 bis 6, dadurch**gekennzeichnet**,
dass eine Steuer- und Regeleinrichtung (100) vorgesehen ist, welche zumindest mittels des Brenners (42) in der Mischkammer (40) und der Menge und/oder dem Sauerstoffgehalt des warmen Prozessgases den Sauerstoffgehalt des Kalzinierungsgases an der Gaszuführung (31) zum Beeinflussen der Farbe des aktivierten Aufgabematerials einstellt.

8. Tonkalzinierungsanlage (10) nach einem der Ansprüche 1 bis 7, dadurch**gekennzeichnet**,
dass stromabwärts eines Materialstromes von aktiviertem Aufgabematerial nach dem Ofenauslass (22) des Drehrohrofens (20) ein Kühler (110), insbesondere ein Rostkühler, vorgesehen ist, welcher ausgebildet ist, das durch thermische Behandlung aktivierte Aufgabematerial mittels Kühlluft innerhalb von 10 Minuten bis 20 Minuten auf unter 400°C zu kühlen.

9. Tonkalzinierungsanlage (10) nach Anspruch 8,
dadurch**gekennzeichnet**,
dass stromabwärts des Materialstromes nach dem Kühler (110) eine Zerkleinerungseinrichtung (120), insbesondere eine Vertikalwälzmühle, vorgesehen ist, welche ausgebildet ist, das gekühlte, aktivierte Aufgabematerial auf eine Größe von maximal R60µm < 15% zu zerkleinern.

10. Tonkalzinierungsanlage (10) nach einem der Ansprüche 1 bis 9,
**dadurch gekennzeichnet,**
**dass** eine erste Entstaubungseinrichtung (130) vorgesehen ist, welche zum Entstauben von Kalzinierungsgas aus dem Trockner (80) und/oder dem Drehrohrofen (20) eingerichtet und angeschlossen ist, und
**dass** eine erste Rückführleitung (131) vorgesehen ist, um den in der ersten Entstaubungseinrichtung (130) abgeschiedenen Staub aus dem Kalzinierungsgas einem Materialstrom von aktivierten Aufgabematerial vor dem Kühler (110) zuzuführen.

11. Tonkalzinierungsanlage (10) nach einem der Ansprüche 8 bis 10,
**dadurch gekennzeichnet,**
**dass** eine zweite Entstaubungseinrichtung (140) vorgesehen ist, welche zum Entstauben von Kühlluft aus dem Kühler (110) eingerichtet und angeschlossen ist, und
**dass** eine zweite Rückführleitung (141) vorgesehen ist, um den in der zweiten Entstaubungseinrichtung (130) abgeschiedenen Staub aus der Kühlluft einem Materialstrom von gekühlten, aktivierten Aufgabematerial nach dem Kühler (110) zuzuführen.

12. Tonkalzinierungsanlage (10) nach einem der Ansprüche 4 bis 11, dadurch**gekennzeichnet**,
dass ein Wärmetauscher (150) vorgesehen und angeschlossen ist, welcher eingerichtet ist, Verbrennungsluft für den Prozessgasbrenner (61), Verbrennungsluft für den thermischen Nachverbrenner (71) und/oder Verbrennungsluft für den Brenner (42) der Mischkammer (40) mittels Wärme des Rauchgases (46) der thermischen Nachverbrennungseinrichtung (70), vorzuwärmen.

13. Tonkalzinierungsanlage (10) nach einem der Ansprüche 4 bis 12,
**dadurch gekennzeichnet,**
**dass** mindestens ein Stromerzeuger (161, 162) vorgesehen und angeschlossen ist, welcher mittels der Kühlluft aus dem Kühler (110) und/oder mittels des Rauchgases der thermischen Nachverbrennungseinrichtung (70) Strom erzeugt.

14. Tonkalzinierungsanlage (10) nach einem der Ansprüche 9 bis 13,
**dadurch gekennzeichnet,**
**dass** eine Leitungsführung vorgesehen ist, um als Prozessgas für die Zerkleinerungseinrichtung (120) Rauchgas (46) aus der thermischen Nachverbrennungseinrichtung (70) und/oder Kühlluft aus dem Kühler (110) einzusetzen.

15. Tonkalzinierungsanlage (10) nach einem der Ansprüche 10 bis 14,
**dadurch gekennzeichnet,**
**dass** eine Leitungsführung vorgesehen, um zumindest teilweise von Staub gereinigtes Kalzinierungsgas aus der ersten Entstaubungseinrichtung (130) dem Prozessgaserzeuger (60) zuzuführen und/oder um die zumindest teilweise von Staub gereinigte Kühlluft aus der zweiten Entstaubungseinrichtung (140) der Zerkleinerungseinrichtung (120) als Prozessgas zuzuführen.

## Claims

1. Clay calcination plant (10) for the activation of clay as a feed material, which clay has a significant proportion of at least 40% of thermally activatable layered silicates in the form of kaolinite, illite and/or montmorillonite,
comprising a directly heated rotary kiln (20), which comprises a kiln inlet (21) and a kiln outlet (22), wherein the rotary kiln (20) is configured to convey the feed material as a material flow from the kiln inlet (21) to the kiln outlet (22) and to thermally treat it while conveying it,
**characterized**
**in that** a gas infeed (31) is provided at the kiln outlet (22) and a gas outfeed (32) is provided at the kiln inlet (21), and
**in that** the clay calcination plant is configured to guide calcination gas from the gas infeed (31) through the rotary kiln (20) to the gas outfeed (32),
**in that** the gas infeed (31) of the rotary kiln (20) is fluidically connected to a mixing chamber (40) for generating a temperature-homogeneous flow of calcination gas,
**in that** the mixing chamber (40) has a cylindrical-like shape,
**in that** a burner (42) for generating hot flue gas (46) from combustion gas as an energy source and combustion air is provided on a face side (41) of the mixing chamber (40),
**in that** the mixing chamber (40) has a process gas infeed (45) for the infeed of warm process gas,
**in that** the clay calcination plant is configured to supply warm process gas through the process gas infeed (45) into the mixing chamber (40),
**in that** the process gas infeed (45), the burner (42) and the mixing chamber (40) are configured to generate a spiral-like flow (47) of the warm process gas, at least in the region of the process gas infeed (45), in order to generate the hot flue gas (46) flowing axially into the mixing chamber (40) by means of the burner, in order to generate the temperature-homogeneous flow of calcination gas.

2. Clay calcination plant (10) according to claim 1,
**characterized**
**in that** a process gas generator (60) is provided, which is configured to heat calcination gas from the gas outfeed (32) by means of a process gas burner (61), and
**in that** a mixing chamber pipe (65) is provided for feeding the heated process gas as warm process gas to the process gas infeed (45) into the mixing chamber (40).

3. Clay calcination plant (10) according to claim 2,
**characterized**
**in that** a thermal afterburning device (70) with a thermal afterburner (71) is provided,
**in that** an afterburning branch (75) is provided in the mixing chamber pipe (65), in order to branch off a portion of the warm process gas from the mixing chamber pipe (65) and feed it to the thermal afterburning device (70),
**in that** the thermal afterburning device (70) is configured to heat the supplied warm process gas by means of the thermal afterburner (71) in such a way as to burn off environmentally harmful substances in the resulting flue gas (46).

4. Clay calcination plant (10) according to one of the claims 1 to 3, **characterized**
**in that** a dryer (80) is arranged upstream of the kiln inlet (21) of the rotary kiln (20) in such a way
that feed material to be fed into the rotary kiln (20) via the kiln inlet (21) is transported through the dryer (80) and
that calcination gas from the gas outfeed (32) is guided through the dryer (80).

5. Clay calcination plant (10) according to one of claims 1 to 4, **characterized**
**in that** spatially above the rotary kiln (20) a pre-drying device (90) for the feed material is arranged, which is configured and set up to pre-dry the feed material by means of radiant heat radiated from the rotary kiln and/or free convection of the rotary kiln (20) and to supply it to the rotary kiln (20) and/or the dryer (80).

6. Clay calcination plant (10) according to one of claims 1 to 5, **characterized**
**in that** a control and regulation device (100) is provided which adjusts the temperature of the calcination gas at the gas infeed (31) for activating the feed material at least by means of the burner (42) in the mixing chamber (40) and the quantity and/or the temperature of the warm process gas.

7. Clay calcination plant (10) according to one of the claims 1 to 6, **characterized**
**in that** a control and regulation device (100) is provided which, at least by means of the burner (42) in the mixing chamber (40) and the quantity and/or the oxygen content of the warm process gas, adjusts the oxygen content of the calcination gas at the gas infeed (31), in order to influence the color of the activated feed material.

8. Clay calcination plant (10) according to one of the claims 1 to 7, **characterized**
**in that** a cooler (110), in particular a grate cooler, is provided downstream of a material flow of activated feed material after the kiln outlet (22) of the rotary kiln (20), which cooler is configured to cool the feed material activated by thermal treatment to below 400° C by means of cooling air within 10 minutes to 20 minutes.

9. Clay calcination plant (10) according to claim 8,
**characterized**
**in that** a comminution device (120), in particular a vertical roller mill, is provided downstream of the material flow after the cooler (110), which is configured to comminute the cooled, activated feed material to a maximum size of R60µm < 15%.

10. Clay calcination plant (10) according to one of the claims 1 to 9, **characterized**
**in that** a first dedusting device (130) is provided, which is set up and connected for dedusting calcination gas from the dryer (80) and/or the rotary kiln (20) and
**in that** a first return line (131) is provided, in order to supply the dust separated in the first dedusting device (130) from the calcination gas to a material flow of activated feed material upstream of the cooler (110).

11. Clay calcination plant (10) according to one of the claims 8 to 10, **characterized**
**in that** a second dedusting device (140) is provided, which is set up and connected for dedusting cooling air from the cooler (110), and
**in that** a second return line (141) is provided, in order to supply the dust separated in the second dedusting device (130) from the cooling air to a material flow of cooled, activated feed material downstream of the cooler (110).

12. Clay calcination plant (10) according to one of the claims 4 to 11, **characterized**
**in that** a heat exchanger (150) is provided and connected, which is set up to preheat combustion air for the process gas burner (61), combustion air for the thermal afterburner (71) and/or combustion air for the burner (42) of the mixing chamber (40) by means of heat from the flue gas (46) of the thermal afterburning device (70).

13. Clay calcination plant (10) according to one of the claims 4 to 12, **characterized**
**in that** at least one power generator (161, 162) is provided and connected, which generates power by means of the cooling air from the cooler (110) and/or by means of the flue gas from the thermal afterburning device (70).

14. Clay calcination plant (10) according to one of the claims 9 to 13, **characterized**
**in that** a conduit routing is provided, in order to use flue gas (46) from the thermal afterburning device (70) and/or cooling air from the cooler (110) as process gas for the comminution device (120).

15. Clay calcination plant (10) according to one of the claims 10 to 14, **characterized**
**in that** a conduit routing is provided for supplying calcination gas, at least partially cleaned of dust, from the first dedusting device (130) to the process gas generator (60) and/or for supplying the cooling air, at least partially cleaned of dust, from the second dedusting device (140) to the comminution device (120) as process gas.

## Revendications

1. Installation de calcination d'argile (10) pour activer de l'argile en tant que matériau d'alimentation, qui présente une proportion significative d'au moins 40 % de silicates en feuillets thermiquement activables sous forme de kaolinite, d'illite et/ou de montmorillonite,
avec un four tubulaire rotatif (20) chauffé directement, qui présente une entrée de four (21) et une sortie de four (22), le four tubulaire rotatif (20) étant réalisé pour transporter le matériau d'alimentation sous forme de flux de matériau de l'entrée de four (21) vers la sortie de four (22) et pour le traiter thermiquement pendant le transport,
**caractérisée en ce qu'**
une amenée de gaz (31) est prévue à la sortie de four (22) et une évacuation de gaz (32) à l'entrée de four (21),
**en ce que** l'installation de calcination d'argile est réalisée pour conduire du gaz de calcination de l'amenée de gaz (31) à travers le four tubulaire rotatif (20) vers l'évacuation de gaz (32),
**en ce que** l'amenée de gaz (31) du four tubulaire rotatif (20) est reliée fluidiquement à une chambre de mélange (40) pour produire un flux de gaz de calcination homogène en température,
**en ce que** la chambre de mélange (40) présente une forme de type cylindrique, **en ce qu'**un brûleur (42) pour produire du gaz de fumée chaud (46) à partir de gaz de combustion en tant que source d'énergie et d'air de combustion est prévu sur un côté frontal (41) de la chambre de mélange (40),
**en ce que** la chambre de mélange (40) présente une amenée de gaz de processus (45) pour l'amenée de gaz de processus chaud,
**en ce que** l'installation de calcination d'argile est réalisée pour amener du gaz de processus chaud par l'amenée de gaz de processus (45) à la chambre de mélange (40),
**en ce que** l'amenée de gaz de processus (45), le brûleur (42) et la chambre de mélange (40) sont réalisés pour produire un écoulement de type spirale (47) du gaz de processus chaud au moins dans la zone de l'amenée de gaz de processus (45) afin de produire le gaz de fumée chaud (46) s'écoulant axialement dans la chambre de mélange (40) au moyen du brûleur, afin de produire le flux de gaz de calcination homogène en température.

2. Installation de calcination d'argile (10) selon la revendication 1,
**caractérisée en ce qu'**
un générateur de gaz de processus (60) est prévu, qui est réalisé pour chauffer du gaz de calcination provenant de l'évacuation de gaz (32) au moyen d'un brûleur de gaz de processus (61) et
**en ce qu'**une conduite de chambre de mélange (65) est prévue pour amener le gaz de processus chauffé en tant que gaz de processus chaud vers l'amenée de gaz de processus (45) dans la chambre de mélange (40).

3. Installation de calcination d'argile (10) selon la revendication 2,
**caractérisée en ce qu'**
un dispositif de post-combustion thermique (70) est prévu avec un post-combusteur thermique (71),
**en ce qu'**une dérivation de post-combustion (75) est prévue dans la conduite de chambre de mélange (65) afin de dériver une partie du gaz de processus chaud de la conduite de chambre de mélange (65) et de l'amener au dispositif de post-combustion thermique (70),
**en ce que** le dispositif de post-combustion thermique (70) est adapté pour chauffer le gaz de processus chaud amené au moyen du post-combusteur thermique (71) de manière à brûler les substances nocives pour l'environnement dans le gaz de fumée (46) produit.

4. Installation de calcination d'argile (10) selon l'une quelconque des revendications 1 à 3,
**caractérisée en ce qu'**
un séchoir (80) est agencé avant l'entrée de four (21) du four tubulaire rotatif (20), de telle sorte
que le matériau d'alimentation à charger dans le four tubulaire rotatif (20) par l'intermédiaire de l'entrée de four (21) soit transporté à travers le séchoir (80) et que le gaz de calcination provenant de l'évacuation de gaz (32) soit acheminé à travers le séchoir (80).

5. Installation de calcination d'argile (10) selon l'une quelconque des revendications 1 à 4,
**caractérisée en ce qu'**
au-dessus du four tubulaire rotatif (20) dans l'espace est agencé un dispositif de pré-séchage (90) pour le matériau d'alimentation, qui est réalisé et adapté pour présécher le matériau d'alimentation au moyen de la chaleur rayonnante émise par le four tubulaire rotatif et/ou de la convection libre du four tubulaire rotatif (20) et pour l'amener au four tubulaire rotatif (20) et/ou au séchoir (80).

6. Installation de calcination d'argile (10) selon l'une quelconque des revendications 1 à 5,
**caractérisée en ce qu'**
un dispositif de commande et de régulation (100) est prévu, qui, au moins au moyen du brûleur (42) dans la chambre de mélange (40) et de la quantité et/ou de la température du gaz de processus chaud, règle la température du gaz de calcination au niveau de l'amenée de gaz (31) afin d'activer le matériau d'alimentation.

7. Installation de calcination d'argile (10) selon l'une quelconque des revendications 1 à 6,
**caractérisée en ce qu'**
un dispositif de commande et de régulation (100) est prévu, qui, au moins au moyen du brûleur (42) dans la chambre de mélange (40) et de la quantité et/ou de la teneur en oxygène du gaz de processus chaud, règle la teneur en oxygène du gaz de calcination au niveau de l'amenée de gaz (31) afin d'influencer la couleur du matériau d'alimentation activé.

8. Installation de calcination d'argile (10) selon l'une quelconque des revendications 1 à 7,
**caractérisée en ce qu'**
il est prévu en aval d'un flux de matériau de matériau d'alimentation activé, après la sortie de four (22) du four tubulaire rotatif (20), un refroidisseur (110), notamment un refroidisseur à grille, qui est réalisé pour refroidir le matériau d'alimentation activé par traitement thermique à moins de 400 °C en 10 minutes à 20 minutes au moyen d'air de refroidissement.

9. Installation de calcination d'argile (10) selon la revendication 8,
**caractérisée en ce qu'**
il est prévu en aval du flux de matériau, après le refroidisseur (110), un dispositif de broyage (120), notamment un broyeurr vertical à rouleaux, qui est réalisé pour broyer le matériau d'alimentation activé refroidi à une taille maximale de R60 µm < 15 %.

10. Installation de calcination d'argile (10) selon l'une quelconque des revendications 1 à 9,
**caractérisée en ce qu'**
un premier dispositif de dépoussiérage (130) est prévu, qui est adapté et raccordé pour dépoussiérer le gaz de calcination provenant du séchoir (80) et/ou du four tubulaire rotatif (20), et
**en ce qu'**une première conduite de retour (131) est prévue pour amener la poussière séparée à partir du gaz de calcination dans le premier dispositif de dépoussiérage (130) à un flux de matériau de matériau d'alimentation activé avant le refroidisseur (110).

11. Installation de calcination d'argile (10) selon l'une quelconque des revendications 8 à 10,
**caractérisée en ce qu'**
un deuxième dispositif de dépoussiérage (140) est prévu, qui est adapté et raccordé pour dépoussiérer l'air de refroidissement provenant du refroidisseur (110), et
**en ce qu'**une deuxième conduite de retour (141) est prévue pour amener la poussière séparée à partir de l'air de refroidissement dans le deuxième dispositif de dépoussiérage (130) à un flux de matériau de matériau d'alimentation activé refroidi après le refroidisseur (110).

12. Installation de calcination d'argile (10) selon l'une quelconque des revendications 4 à 11,
**caractérisée en ce qu'**
un échangeur de chaleur (150) est prévu et raccordé, qui est adapté pour préchauffer de l'air de combustion pour le brûleur de gaz de processus (61), de l'air de combustion pour le post-combusteur thermique (71) et/ou de l'air de combustion pour le brûleur (42) de la chambre de mélange (40) au moyen de la chaleur du gaz de fumée (46) du dispositif de post-combustion thermique (70).

13. Installation de calcination d'argile (10) selon l'une quelconque des revendications 4 à 12,
**caractérisée en ce qu'**
au moins un générateur d'électricité (161, 162) est prévu et raccordé, lequel produit de l'électricité au moyen de l'air de refroidissement provenant du refroidisseur (110) et/ou au moyen du gaz de fumée du dispositif de post-combustion thermique (70).

14. Installation de calcination d'argile (10) selon l'une quelconque des revendications 9 à 13,
**caractérisée en ce qu'**
un guide de conduite est prévu afin d'utiliser en tant que gaz de processus pour le dispositif de broyage (120) le gaz de fumée (46) provenant du dispositif de post-combustion thermique (70) et/ou l'air de refroidissement provenant du refroidisseur (110).

15. Installation de calcination d'argile (10) selon l'une quelconque des revendications 10 à 14,
**caractérisée en ce qu'**
un guide de conduite est prévu pour amener au générateur de gaz de processus (60) du gaz de calcination au moins partiellement débarrassé de la poussière provenant du premier dispositif de dépoussiérage (130) et/ou pour amener au dispositif de broyage (120) l'air de refroidissement au moins partiellement débarrassé de la poussière provenant du deuxième dispositif de dépoussiérage (140) en tant que gaz de processus.
